# EUROPEAN PATENT SPECIFICATION

(11) **EP 2 185 619 B1**
(45) Date of publication and mention of the grant of the patent: **28.12.2011**
(21) Application number: 08828214.0
(22) Date of filing: 31.07.2008
(51) Int. Cl.: C08G 18/48, C08J 9/00, C08G 101/00

(54) **FLAME RETARDANTS SUITABLE FOR USE IN VISCOELASTIC POLYURETHANE FOAMS**
FLAMMENHEMMER ZUR VERWENDUNG IN VISKOELASTISCHEN POLYURETHANSCHAUMSTOFFEN
IGNIFUGEANTS APPROPRIÉS POUR ÊTRE UTILISÉS DANS DES MOUSSES DE POLYURÉTHANE VISCOÉLASTIQUES

(30) Priority: 07.08.2007 US 954500 P
(43) Date of publication of application: 19.05.2010
(73) Proprietor: Albemarle Corporation, Baton Rouge, LA 70801 (US)
(72) Inventor: GERARD, Eric-Jack, Nanjing 210014 (CN); ZHENG, Haiting, Nanjing 210018 (CN); WANG, Jeff, Nanjing 210018 (CN)
(74) Representative: UEXKÜLL & STOLBERG
(86) International application number: PCT/US2008/071678
(87) International publication number: WO 2009/029378

(56) References cited:
- WO-A-98/16567
- US-B1- 6 316 514

## Description

### FIELD OF THE INVENTION

The present invention relates to viscoelastic polyurethane foam formulations, viscoelastic polyurethane foams formed from such formulations, and products formed from the viscoelastic polyurethane foams.

### BACKGROUND OF THE INVENTION

Flexible, viscoelastic polyurethane foam (also known as "dead" foam, "slow recovery" foam, or "high damping" foam) is characterized by slow, gradual recovery from compression. While most of the physical properties of viscoelastic foams resemble those of conventional foams, the resilience of viscoelastic foams is much lower, generally less than
15%. Suitable applications for viscoelastic foam take advantage of its shape conforming, energy attenuating, and sound damping characteristics. For example, the foam can be used in mattresses to reduce pressure points, in athletic padding or helmets as a shock absorber, and in automotive interiors for soundproofing.
US-B1-6 316 514 discloses sound-damping and energy-absorbing flexible viscoelastic polyurethane foams. The example 5 discloses a composition comprising chlorinated phosphate esters flame retardants (see column 8 1.46-49), isocyanate mixtures and a diol which is capped with 100% of primary hydroxyl groups.

Because of the uses of products produced from viscoelastic flexible polyurethane foams, it is desirable that these products have flame retardant qualities.

### SUMMARY OF THE INVENTION

In one embodiment, the present invention relates to a flexible viscoelastic polyurethane foam formulation comprising a) a flame retarding amount of i) one or more chlorinated phosphate esters, ii) one or more brominated flame retardants, iii) one or more phosphorous-based halogen-free flame retardants, or iv) combinations of i), ii) and/or iii), b) at least one isocyanate having a functionality of at least two; c) at least one diol wherein in the range of from 50% to 95% of the terminal OH groups of the diol are primary OH groups; and, optionally, d) one or *more i)* surfactants, *ii)* antioxidants, *iii)* diluents, *iv)* chain extenders or cross linkers, *v)* synergists, preferably melamine; *vi)* plasticizers, *vii*) catalysts, *viii*) water, *ix*) alternative blowing agents like methylene chloride, x) pigments, xi) cell-openers.

In another embodiment, the present invention relates to a method for forming a flexible viscoelastic polyurethane foam comprising bringing together in the presence of one or more catalysts: a) a flame retarding amount of i) one or more chlorinated phosphate esters, ii) one or more brominated flame retardants, iii) one or more phosphorous-based halogen-free flame retardants or iv) combinations of i), ii) and/or iii), b) at least one isocyanate having a
functionality of at least two; c) at least one diol wherein in the range of from 50% to 95% of the terminal OH groups of the diol are primary OH groups; and, optionally, d) one or *more i)* surfactants, *ii)* antioxidants, *iii)* diluents, *iv)* chain extenders or cross linkers, *v)* synergists, preferably melamine; *vi)* plasticizers, vii) water, viii) alternative blowing agents like methylene chloride, ix) pigments, x) cell-openers.

In another embodiment, the present invention relates to a flexible viscoelastic polyurethane foam formulation derived or derivable from: a) a flame retarding amount of i) one or more chlorinated phosphate esters, ii) one or more brominated flame retardants, iii) one or more phosphorous-based halogen-free flame retardants or iv) combinations of i), ii) *and*/*or* iii), b) at least one isocyanate having a functionality of at least two; c) at least one diol wherein in the range of from 50% to 95% of the terminal OH groups of the diol are primary OH groups; and, optionally, d) one or more *i)* surfactants, *ii)* antioxidants, *iii)* diluents, iv) chain extenders or cross linkers, *v)* synergists, preferably melamine; *vi)* plasticizers, vii) catalysts, viii) water, ix) alternative blowing agents like methylene chloride, x) pigments, xi) cell-openers.

In other embodiments, the present invention relates to articles made from the flexible viscoelastic polyurethane foam formulations of the present invention.

### DETAILED DESCRIPTION OF THE INVENTION

As stated above, common technology used to manufacture viscoelastic polyurethane foams relies on defects in the polyurethane network structure, i.e. "dangling chains". Currently, the creation of defects in the foam is obtained through the use of formulations designed to have a shortage of isocyanate groups. By proceeding in this fashion, the foam producers insures that, after the reaction between the isocynate and polyol, some hydroxy groups borne by the polyol molecules remain unreacted in the foam thus formed. The unreacted hydroxy groups are the "dangling chains" that create the desired "slow recovery" characteristics of the viscoelastic polyurethane foams. More recent viscoelastic foam technologies have been developed that are based on the use of polyol blends containing a large proportion of mono-functional (i.e. monols). After reaction completion, these monols act as dangling materials and impart the foam with the desired visco-elastic properties. Such monols containing polyol blends do allow the use of higher concentration of isocyanate, sometimes approaching the 100 isocyanate index. The inventors hereof have discovered, however, that by using specific diols, such as those described herein, and the flame retardants described herein, a flexible viscoelastic polyurethane foam or foam formulation can be produced without creating dangling chains, i.e. without using a formulation designed to insure a shortage of isocynate groups, sometimes called a 100 isocyanate index. This is a particularly desired quality of the foams of the present invention because upon burning, these dangling chains induce a severe dripping making it extremely difficult, in some instances bordering impossible, even with large loadings of flame retardants and synergists, to meet fire standards like BS5852 crib 5 where the weight loss occurring during burning is a test criteria. In addition, adding large loadings of solid flame retardant synergist like melamine eliminates the foam's desired slow recovery behavior without bringing significant flame retardance improvement, nor meeting consistent positive results in fire standard tests like BS5852 crib 5.

Isocyanates suitable for use in the present invention include any isocyanate used in the production of flexible polyurethane foams. These isocyanates, most preferred diisocyanates, are well known components of polyurethane foams and polyurethane foam formulations and include any compounds which possess at least one free cyanate reactive group, and most preferably two, although more may be utilized. Such compounds may also be aliphatic or aromatic in nature. Non-limiting examples of isocyanates suitable for use in the present invention include aromatic, aliphatic, and cycloaliphatic polyisocyanates and combinations thereof such as m-phenylene diisocyanate, 2,4-toluene diisocyanate, 2,6-toluene diisocyanate, mixtures of 2,4- and 2,6-toluene diisocyanate, hexamethylene diisocyanate, tetramethylene diisocyanate, cyclohexane-1,4-diisocyanate, hexahydrotoluene diisocyanate (and isomers), naphthalene-1,5-diisocyanate, 1-methoxyphenyl-2,4-diisocyanate, 4,4'-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate and 3,3'-dimethyldiphenylmethane-4,4'-diisocyanate; the triisocyanates such as 4,4',4"-triphenylmethane triisocyanate, and toluene 2,4,6-triisocyanate; and the tetraisocyanates such as 4,4'-dimethyldiphenylmethane-2,2',5,5'-tetraisocyanate and polymeric polyisocyanates such as polymethylene polyphenylene polyisocyanate. Crude polyisocyanates may also be used in the compositions of the present invention, such as crude toluene diisocyanate obtained by the phosgenation of a mixture of toluene diamines or crude diphenylmethane isocyanate obtained by the phosgenation of crude diphenylmethanediamine. These crude isocyanates are disclosed in U.S. Pat. No. 3,215,652.

The most prominently utilized isocyanates, and thus the most preferred types for this invention (though not required), are toluene diisocyanate ("TDI"), diphenylmethane diisocyanate ("MDI") or methylene diisocyanate (others, such as aliphatic isocyanates may be utilized, as well as other aromatic types). The polyol is generally reacted with a slight excess of isocyanate (hydroxyl OH groups on isocyanate NCO groups ratio of from 1:0.85 to 1:1.40) to produce a soft flexible foam product; the greater the ratio, the harder the produced foam).

The diols suitable for use in the present invention can be either polyether or polyester diols. The diols used in the practice of the present invention are those wherein in the range of from 50% to 95% of the OH groups of the diol are primary OH groups. In preferred embodiments, the diols are those wherein in the range of from 65% to 90%, more preferably in the range of from 70% to 85%, of the OH groups of the diol are primary OH groups.

The diols suitable for use herein can also be described as having a number average molecular weight of greater than 1000 g/mole, preferably in the range of from 1000 g/mole to 4000 g/mole, more preferably in the range of from 1500 g/mole to 3000 g/mole.

Preferred diols are polyoxyalkylene diols. In some embodiments, the polyoxyalkylene diols can have any desired arrangement of polyoxyalkylene units. For example, the polyoxyalkylene diols can be Propylene Oxide ("PO")-based homopolymers, block Ethylene Oxide ("EO")-PO copolymers, random EO/PO copolymers, PO-based polyols that are "capped" or "tipped" with a mixture EO and PO to achieve a desired primary hydroxyl content, or any other desired configuration. In a particularly preferred embodiment, the polyalkylkene diol used in the practice of the present invention is a PO-based polyol tipped with EO to achieve the desired primary hydroxyl content. In some embodiments, the polyalkylene diols used in the practice of the present invention are those having a percentage of EO added as a "tip" on total PO + EO added during manufacturing in the range of from 1% to 20%, preferably of from 5% to 15%, more preferably from 9% to 13%.

The viscoelastic formulations of the present invention also contain a flame retardant, in some embodiments a flame retarding amount of a flame retardant, selected from i) one or more chlorinated phosphate esters, ii) one or more brominated flame retardants, iii) one or more phosphorous-based halogen-free flame retardants or iv) combinations of i), ii) and/or iii). By a flame retarding amount, it is meant that amount sufficient to meet or exceed the test standards set forth in BS5852 flammability test. Generally, depending on the foam density, this is in the range of from 5 to 50 parts per hundred parts of polyol(s) ("php") of the flame retardant additive. In preferred embodiments, a flame retarding amount is to be considered in the range of from 10 to 35 php more preferably in the range of , from 12 to 25 php.

Chlorinated Phosphate esters suitable for use herein can be selected from any chlorinated phosphate esters, which are conventionally used in the art of making flexible, flame retarded polyurethane foams.

Specific examples of suitable chlorinated phosphate esters used in exemplary embodiments are: tris(1,3-dichloropropyl) phosphate; also known as TDCP, tris(2-chloropropyl)phosphate, also known as TCPP or TMCP, 2,2-bis(chloromethyl)1,3 propylene bis[di(2-chloroethyl)phosphate], also known as V6, tris(2-chloroethyl)phosphate, also known as TCEP.

In these embodiments, the chlorinated phosphate esters used in the present invention typically contain in the range of from 5 to 15wt% organic phosphorous, based on the total weight of the phosphate ester. Preferably, the organic phosphorus content is in the range of from 6 to 13wt%, on the same basis, and in more preferred embodiments the organic phosphorous content is in the range of from 7 to 12wt%, on the same basis.

In these embodiments, the chlorinated phosphate esters used in the present invention typically contain in the range of from 20 to 60wt% chlorine, based on the total weight of the phosphate ester. Preferably, the chlorinated phosphate esters contain in the range of from 30 to 50wt%, of chlorine, on the same basis.

Bromine containing flame retardants suitable for use in the of the invention can be either reactive or non reactive, i.e. they react or not with the isocyanate and can be selected from any of those used in the art of making flame retarded polyurethane foams.

Specific examples of suitable brominated flame retardants used in exemplary embodiments are reactive bromine containing diester/ether diol of tetrabromophtalic anhydride. A commercial example of this class of products is Saytex® RB-79.

In these embodiments, the brominated flame retardants for use in the present invention typically contain in the range of from 10 to 70 wt% bromine, based on the total weight of the brominated flame retardant. Preferably, the bromine content is in the range of 25 to 60wt%, on the same basis. In more preferred embodiments, the bromine content of the brominated flame retardant is in the range of 35 to 55wt%, based on the total weight of the brominated flame retardant.

Phosphorous-based halogen free flame retardants suitable for use in the invention can be reactive non reactive, i.e. they react or not with the isocyanate, and can be selected from any of those used in the art of making flame retarded polyurethane foams. Typical classes of suitable phosphorous-based halogen free flame retardants for use in the invention are phosphates, phosphonates, phosphites, phosphinates as well as aminoalkyl compounds thereof.

In these embodiments, the phosphorous-based halogen-free flame retardants typically contain in the range of from 5 to 40 wt% phosphorous, based on the total weight of the phosphorous-based halogen-free flame retardant. Preferably, the phosphorous content is in the range of 10 to 30wt%, on the same basis.

The viscoelastic foam formulations of the present invention can include, and in some embodiments do include, one or more *i)* surfactants, *ii)* antioxidants, *iii)* diluents, *iv)* chain extenders or cross linkers, *v)* synergists, preferably melamine; *vi)* plasticizers, vii) catalysts, viii) water, ix) alternative blowing agents like methylene chloride, x) pigments, xi) cell-openers. In some embodiments, one or more *i)* surfactants, *ii)* antioxidants, *iii)* diluents, *iv)* chain extenders or cross linkers, *v)* synergists, preferably melamine: *vi)* plasticizers, vii) catalysts, viii) water, ix) alternative blowing agents like methylene chloride, x) pigments, or xi) cell-openers. These optional components are well known in the art and the amount of these optional components is conventional and not critical to the instant invention.

Usable chain extenders and/or cross-linkers are diols and/or triols with molecular weights lower than 250 and particularly between 50 and 200. Usable diols are aliphatic, cycloaliphatic or aromatic types, e.g., ethylene glycol, diethylene glycol, dipropylene glycol, and 1,4 butanediol. Usable triols include, for example, trimethylolpropane and glycerine.

Examples of suitable surfactants are emulsifiers such as sodium salts of castor oil sulfates or fatty acids; fatty acid salts with amines, *e.g*., diethylamine oleate and diethanolamine stearate; salts of sulfonic acids, *e.g*., alkali metal or ammonium salts of dodecylbenzenedisulfonic acid and ricinoleic acid; foam stabilizers such as siloxaneoxyalkylene copolymers and other organopolysiloxanes, ethoxylated alkylphenols, ethoxylated fatty alcohols and castor oil. Other suitable surfactants are organosilicone surfactants.

Suitable plasticizers include dioctyl phthalate, distearyl phthalate, diisodecyl phthalate, dioctyl adipate, tricresyl phosphate, triphenyl phosphate, and the like.

Viscoelastic foams of the present invention can be prepared by combining viscoelastic foam formulations, a) - c), using Isocyanate index greater than 95%, along with any optional components *i)* - xi*)*, with one or more catalysts and one or more blowing agents, or the individual components combined in the presence of one or more catalysts and one or more blowing agents, thereby producing viscoelastic foams that meet or exceed the requirements of BS5852. In some embodiments, the level of toluene di-amine present in the viscolelastic foam is less than 5ppm, based on the total foam weight.

Blowing agents suitable for use herein include water, a volatile hydrocarbon, halocarbon, or halohydrocarbon, or mixtures of two or more such materials, preferably water. Catalysts suitable for use herein can be categorized as gel catalysts (e.g. stannous or tin salts), blow catalysts (e.g. amine catalysts), or "balanced" gel/blow catalysts. Gel catalysts promote the reaction between the reactive hydrogen atoms, particularly of the hydroxyl groups, and the isocyanates. Blow catalysts promote the reaction of the reactive hydrogen of water and the pluri-isocyanate. Non-limiting examples of suitable catalysts include amine catalysts, tinbased catalysts, bismuth-based catalysts or other organometallic catalysts, and the like. Examples of suitable tertiary amines as blowing catalyst include, *e.g*., bis (dimethylaminoethyl) ether and pentamethyldiethylentriamine. Examples of gel catalysts include 1,4-diaza(2,2,2)bicyclooctane; tetramethyldipropylentriamine; and tris(dimethylaminopropyl)hydrotriazine.

The following examples will illustrate the present invention, but are not meant to be limiting in any manner.

### EXAMPLES

In the following examples, the components indicated in the examples were combined to form foams that were subjected to BS 5852 Crib 5 tests, and the results are reported in the examples. The components were combined under standard atmospheric conditions.
In the following examples, the components used were : Polyol 56 OH value: Caradol SC56-02, available from the Shell Chemicals Company; Polyol 200 OH value: Yukol 1030 available from SK Oxichemicals; Amine 2 catallyst: Dabco® 33 LV available from Air Products; Amine 1 catalyst: Dabco® A1 available from from Air Products or Niax A1 available from GE; Stannous Octoate: Dabco® T9 available from Air Products; and Silicone: Niax L 650 from GE or B 8229 from Degussa.

### EXAMPLE 1: TCPP/MELAMINE CONTAINING. LOW INDEX VISCOELASTIC FOAM

| | **(COMPARATIVE)** |
|---|---|
| Polyol 1, 56 OH value: | 60 parts |
| Polyol 2, 300 OH value: | 40 parts |
| Water, php | 2.2 |
| Silicone surfactant, php | I |
| Amine Catalyst 1, php | 0.15 |
| Amine Catalyst 2, php | 0.2 |
| Stannous Octoate, php | 0.28 |
| Antiblaze 81 /TCPP, php | 15 |
| Melamine, php | 30 |
| TDI Index | 83 |
| Foam Density, kg/m3 | 53 |
| Recovery Time, s | 6 |
| BS 5852 Crib 5, burning time, min | > 7, manual extinction required |
| BS5852 Crib 5, weight loss, g | > 60, Fail |

### EXAMPLE 2: V6/MELAMINE CONTAINING. LOW INDEX VISCOELASTIC FOAM

| | (**COMPARATIVE**) |
|---|---|
| Polyol 1, 56 OH value: | 60 parts |
| Polyol 2, 300 OH value: | 40 parts |
| Water, php | 2.2 |
| Silicone surfactant, php | 1 |
| Amine Catalyst 1, php | 0.15 |
| Amine Catalyst 2, php | 0.2 |
| Stannous Octoate, php | 0.28 |
| Antiblaze V6, php | 15 |
| Melamine, php | 30 |
| TDI Index | 83 |
| Foam Density, kg/m3 | 53 |
| Recovery Time, s | 6 |
| BS 5852 Crib 5, burning time, min | > 7, manual extinction required |
| BS5852 Crib 5, weight loss, g | > 60, Fail |

### EXAMPLE 3: RX-35/MELAMINE CONTAINING, HIGH INDEX DIOL CONTAINING

| **VISCOELASTIC FOAM** | |
|---|---|
| Polyol 1, 56 OH value: | 60 parts |
| Polyol 2, 300 OH value: | 40 parts |
| Water, php | 2.2 |
| Silicone surfactant, php | 1 |
| Amine Catalyst 1, php. | 0.15 |
| Amine Catalyst 2, php | 0.2 |
| Stannous Octoate, php | 0.28 |
| Tipped diol, 56 OH value | 7.5 |
| Antiblaze RX-35, php | 15 |
| Melamine, php | 30 |
| TDI Index | 100 |
| | |
| Foam Density, kg/m3 | 55 |
| Recovery Time, s | 4.5 |
| BS 5852 Crib 5, burning time, min | 5'13" |
| BS5852 Crib 5, weight loss, g | 38, Pass |

### Example 4: V6 / Melamine containing, high Index - diol containing Viscoelastic Foam

| | |
|---|---|
| Polyol 1, 56 OH value: | 60 parts |
| Polyol 2, 300 OH value: | 40 parts |
| Water, php | 2.2 |
| Silicone surfactant, php | 1 |
| Amine Catalyst 1, php | 0.15 |
| Amine Catalyst 2, php | 0.2 |
| Stannous Octoate, php | 0.28 |
| Tipped diol, 56 OH value | 7.5 |
| Antiblaze V6, php | 15 |
| Melamine, php | 30 |
| TDI Index | 100 |
| | |
| Foam Density, kg/m3 | 54 |
| Recovery Time, s | 5 |
| BS 5852 Crib 5, burning time, min | 5' 13" |
| BS5852 Crib 5, weight loss, g | 47, Pass |

## Claims

1. A flexible viscoelastic polyurethane foam formulation comprising:
a) flame retardant selected from i) one or more chlorinated phosphate esters, ii) one or more brominated flame retardants, iii) one or more phosphorous-based halogen-free flame retardants, or iv) combinations of i), ii) and/or iii);
b) at least one isocyanate having a functionality of at least two;
c) at least one diol wherein in the range of from 50% to *95%* of the terminal OH groups of the diol are primary OH groups; and, optionally,
d) one or more *i)* surfactants, *ii)* antioxidants, *iii)* diluents, *iv)* chain extenders or cross linkers, *v)* synergists, preferably melamine; *vi)* plasticizers, *vii)* catalysts, *viii)* water, *ix)* alternative blowing agents like methylene chloride, *x)* pigments, *xi)* cell-openers.

2. The formulation according to claim 1 wherein said isocyanates are selected from toluene diisocyanate ("TDI"), diphenylmethane diisocyanate ("MDI") or methylene diisocyanate.

3. The formulation according to claim 1 wherein said diols are polyether or polyester diols.

4. The formulation according to claim 1 wherein the chlorinated phosphate esters used in the present invention contain in the range of from 5 to 15 wt% organic phosphorous, based on the total weight of the phosphate ester.

5. The formulation according to claim 1 wherein the bromine-containing flame retardants contain in the range of from 10 to 70 wt% bromine, based on the total weight of the brominated flame retardant.

6. The formulation according to claim 1 wherein the phosphorous-based halogen-free flame retardants contain in the range of from 5 to 40 wt% phosphorous, based on the total weight of the phosphorous-based halogen-free flame retardant.

7. The formulation according to claim 1 wherein the flame retardant is a bromine-containing flame retardant.

8. The formulation according to claim 1 wherein the flame retardant is a bromine-containing flame retardant selected from reactive bromine containing diester/ether diol of tetrabromophtalic anhydride.

9. A method for forming a flexible viscoelastic polyurethane foam comprising bringing together in the presence of one or more catalysts:
a) a flame retarding amount of i) one or more chlorinated phosphate esters, ii) one or more brominated flame retardants, iii) one or more phosphorous-based halogen-free flame retardants, or iv) combinations of i), ii) and/or iii);
b) at least one isocyanate having a functionality of at least two;
c) at least one diol wherein in the range of from 50% to 95% of the terminal OH groups of the diol are primary OH groups; and, optionally,
d) one or more *i)* surfactants, *ii)* antioxidants, *iii)* diluents, *iv)* chain extenders or cross linkers, *v)* synergists, preferably melamine; *vi)* plasticizers, *vii)* water, *viii)* alternative blowing agents like methylene chloride, *ix)* pigments, *x)* cell-openers, thereby forming a viscolelastic polyurethane foam.

10. The method according to claim 9 wherein said isocyanates are selected from toluene diisocyanate ("TDI"), diphenylmethane diisocyanate ("MDI") or methylene diisocyanate.

11. The method according to claim 9 wherein said diols are polyether or polyester diols.

12. The method according to claim 9 wherein the chlorinates phosphate esters used in the present invention contain in the range of from 5 to 15 wt% organic phosphorous, based on the total weight of the phosphate ester.

13. The method according to claim 9 wherein the bromine-containing flame retardants contain in the range of from 10 to 70 wt% bromine, based on the total weight of the brominated flame retardant.

14. The method according to claim 9 wherein the phosphorous-based halogen-free flame retardants contain in the range of from 5 to 40 wt% phosphorous, based on the total weight of the phosphorous-based halogen-free flame retardant.

15. The method according to claim 9 wherein the flame retardant is a bromine-containing flame retardant.

16. The method according to claim 9 wherein the flame retardant is a bromine-containing flame retardant selected from reactive bromine containing diester/ether diol of tetrabromophtalic anhydride.

17. The flexible viscoelastic polyurethane foam formulation according to claim 1 comprising:
a) one or more brominated flame retardants;
b) at least one diisocyanate;
c) at least one polyoxyalkylene diol wherein in the range of from 50% to 95% of the terminal OH groups of the diol are primary OH groups; and, optionally,
d) one or more *i)* surfactants, *ii)* antioxidants, *iii)* diluents, *iv)* chain extenders or cross linkers, *v)* synergists, preferably melamine; *vi)* plasticizers, *vii)* catalysts, *viii)* water, *ix)* alternative blowing agents like methylene chloride, *x)* pigments, *xi)* cell-openers.

18. The formulation according to claim 17 wherein the bromine-containing flame retardant is a reactive bromine containing diester/ether diol of tetrabromophtalic anhydride.

## Patentansprüche

1. Flexible, viskoelastische Polyurethanschaumformulierung, die umfasst:
a) Flammschutzmittel ausgewählt aus i) einem oder mehreren chlorierten Phosphatestern, ii) einem oder mehreren bromierten Flammschutzmitteln, iii) einem oder mehreren auf Phosphor basierenden, halogenfreien Flammschutzmitteln oder iv) Kombinationen von i), ii) und/oder iii),
b) mindestens ein Isocyanat mit einer Funktionalität von mindestens zwei,
c) mindestens ein Diol, wobei 50% bis 95% der endständigen OH Gruppen des Diols primäre OH Gruppen sind, und gegebenenfalls
d) ein oder mehrere i) Tenside, ii) Antioxidantien, iii) Verdünnungsmittel, iv) Kettenverlängerungsmittel oder Vernetzungsmittel, v) Synergisten, vorzugsweise Melamin, vi) Weichmacher, vii) Katalysatoren, viii) Wasser, ix) alternative Treibmittel wie Methylenchlorid, x) Pigmente, xi) Zellöffnungsmittel.

2. Formulierung nach Anspruch 1, bei der die Isocyanate ausgewählt sind aus Toluoldiisocyanat ("TDI"), Diphenylmethandiisocyanat ("MDI") oder Methylendiisocyanat.

3. Formulierung nach Anspruch 1, bei der die Diole Polyether-oder Polyesterdiole sind.

4. Formulierung nach Anspruch 1, bei der die chlorierten Phosphatester, die erfindungsgemäß verwendet werden, 5 bis 15 Gew.-% organischen Phosphor enthalten, bezogen auf das Gesamtgewicht des Phosphatesters.

5. Formulierung nach Anspruch 1, bei der die Brom enthaltenden Flammschutzmittel 10 bis 70 Gew.-% Brom enthalten, bezogen auf das Gesamtgewicht des bromierten Flammschutzmittels.

6. Formulierung nach Anspruch 1, bei der die auf Phosphor basierenden, halogenfreien Flammschutzmittel 5 bis 40 Gew.-% Phosphor enthalten, bezogen auf das Gesamtgewicht des auf Phosphor basierenden, halogenfreien Flammschutzmittels.

7. Formulierung nach Anspruch 1, bei der das Flammschutzmittel ein Brom enthaltendes Flammschutzmittel ist.

8. Formulierung nach Anspruch 1, bei der das Flammschutzmittel ein Brom enthaltendes Flammschutzmittel ausgewählt aus reaktives Brom enthaltendem Diester-/Etherdiol von Tetrabromphthalsäureanhydrid.

9. Verfahren zur Herstellung eines flexiblen, viskoelastischen Polyurethanschaums, bei dem in Gegenwart eines oder mehrerer Katalysatoren zusammengebracht werden:
a) eine flammhemmende Menge von i) einem oder mehreren chlorierten Phosphatestern, ii) einem oder mehreren bromierten Flammschutzmitteln, iii) einem oder mehreren auf Phosphor basierenden, halogenfreien Flammschutzmitteln oder iv), Kombinationen von i), ii) und/oder iii),
b) mindestens ein Isocyanat mit einer Funktionalität von mindestens zwei,
c) mindestens ein Diol, wobei 50% bis 95% der endständigen OH Gruppen des Diols primären OH Gruppen sind, und gegebenenfalls
d) ein oder mehrere i) Tenside, ii) Antioxidantien, iii) Verdünnungsmittel, iv) Kettenverlängerungsmittel oder Vernetzungsmittel, v) Synergisten, vorzugsweise Melamin, vi) Weichmacher, vii) Wasser, viii) alternative Treibmittel wie Methylenchlorid, ix) Pigmente, x) Zellöffnungsmittel,
wodurch ein viskoelastischer Polyurethanschaum gebildet wird.

10. Verfahren nach Anspruch 9, bei dem die Isocyanate ausgewählt sind aus Toluoldiisocyanat ("TDI"), Diphenylmethandiisocyanat ("MDI") oder Methylendiisocyanat.

11. Verfahren nach Anspruch 9, bei dem die Diole Polyether-oder Polyesterdiole sind.

12. Verfahren nach Anspruch 9, bei dem die chlorierten Phosphatester, die erfindungsgemäß verwendet werden, 5 bis 15 Gew.-% organischen Phosphor enthalten, bezogen auf das Gesamtgewicht des Phosphatesters.

13. Verfahren nach Anspruch 9, bei dem die Brom enthaltenden Flammschutzmittel 10 bis 70 Gew.-% Brom enthalten, bezogen auf das Gesamtgewicht des bromierten Flammschutzmittels.

14. Verfahren nach Anspruch 9, bei dem die auf Phosphor basierenden, halogenfreien Flammschutzmittel 5 bis 40 Gew.-% Phosphor enthalten, bezogen auf das Gesamtgewicht des auf Phosphor basierenden, halogenfreien Flammschutzmittels.

15. Verfahren nach Anspruch 9, bei dem das Flammschutzmittel ein Brom enthaltendes Flammschutzmittel ist.

16. Verfahren nach Anspruch 9, bei dem das Flammschutzmittel ein Brom enthaltendes Flammschutzmittel ausgewählt aus reaktives Brom enthaltenden Diester-/Etherdiol von Tetrabromphthalsäureanhydrid.

17. Flexible, viskoelastische Polyurethanschaumformulierung nach Anspruch 1, die umfasst:
a) ein oder mehrere bromierte Flammschutzmittel,
b) mindestens ein Diisocyanat,
c) mindestens ein Polyoxyalkylendiol, wobei 50 bis 95% der endständigen OH Gruppen des Diols primäre OH Gruppen sind, und gegebenenfalls
d) ein oder mehrere i) Tenside, ii) Antioxidantien, iii) Verdünnungsmittel, iv) Kettenverlängerungsmittel oder Vernetzungsmittel, v) Synergisten, vorzugsweise Melamin, vi) Weichmacher, vii) Katalysatoren, viii) Wasser, ix) alternative Treibmittel wie Methylenchlorid, x) Pigmente, xi) Zellöffnungsmittel.

18. Formulierung nach Anspruch 17, bei der das Brom enthaltende Flammschutzmittel ein reaktives Brom enthaltendes Diester-/Etherdiol von Tetrabromphtalsäureanhydrid ist.

## Revendications

1. Formulation de mousse de polyuréthane viscoélastique flexible comprenant :
a) un ignifugeant choisi parmi i) un ou plusieurs esters phosphates chlorés, ii) un ou plusieurs ignifugeants bromés, iii) un ou plusieurs ignifugeants dépourvus d'halogène à base de phosphore ou iv) des combinaisons de i), ii) et/ou iii) ;
b) au moins un isocyanate ayant une fonctionnalité d'au moins deux ;
c) au moins un diol dans lequel 50% à 95% des groupes OH terminaux du diol sont des groupes OH primaires ; et, éventuellement,
d) un ou plusieurs i) surfactants, ii) antioxydants, iii) diluants, iv) prolongateurs de chaîne ou agents de réticulation, v) synergistes, de préférence la mélamine ; vi) agents plastifiants, vii) catalyseurs, viii) eau, ix) variantes d'agents de soufflage comme le chlorure de méthylène, x) pigments, xi) agents d'ouverture des cellules.

2. Formulation selon la revendication 1, dans laquelle lesdits isocyanates sont choisis parmi le diisocyanate de toluène (« TDI »), le diisocyanate de diphénylméthane (« MDI ») ou le diisocyanate de méthylène.

3. Formulation selon la revendication 1, dans laquelle lesdits diols sont des polyéthers ou polyesters diols.

4. Formulation selon la revendication 1, dans laquelle les esters phosphates chlorés utilisés dans la présente invention contiennent dans la plage de 5 à 15% en poids de phosphore organique, en se basant sur le poids total de l'ester phosphate.

5. Formulation selon la revendication 1, dans laquelle les ignifugeants contenant du brome contiennent dans la plage de 10 à 70% en poids de brome, en se basant sur le poids total de l'ignifugeant bromé.

6. Formulation selon la revendication 1, dans laquelle les ignifugeants dépourvus d'halogène à base de phosphore contiennent dans la plage de 5 à 40% en poids de phosphore en se basant sur le poids total de l'ignifugeant dépourvu d'halogène à base de phosphore.

7. Formulation selon la revendication 1, dans laquelle l'ignifugeant est un ignifugeant contenant du brome.

8. Formulation selon la revendication 1, dans laquelle l'ignifugeant est un ignifugeant contenant du brome choisi parmi un diester/éther diol de l'anhydride tétrabromophtalique contenant du brome réactif.

9. Procédé de formation d'une mousse de polyuréthane viscoélastique flexible comprenant la mise en contact en présence d'un ou plusieurs catalyseurs :
a) d'une quantité ignifugeante i) d'un ou plusieurs esters phosphates chlorés, ii) d'un ou plusieurs ignifugeants bromés, iii) d'un ou plusieurs ignifugeants dépourvus d'halogène à base de phosphore, ou iv) des combinaisons de i), ii) et/ou iii) ;
b) d'au moins un isocyanate ayant une fonctionnalité d'au moins deux ;
c) d'au moins un diol dans lequel 50% à 95% des groupes OH terminaux du diol sont des groupes OH primaires ; et, éventuellement,
d) d'un ou plusieurs i) surfactants, ii) antioxydants, iii) diluants, iv) prolongateurs de chaîne ou agents de réticulation, v) synergistes, de préférence la mélamine ; vi) agents plastifiants, vii) eau, viii) variantes d'agents de soufflage comme le chlorure de méthylène, ix) pigments, x) agents d'ouverture des cellules formant de cette manière une mousse de polyuréthane viscoélastique.

10. Procédé selon la revendication 9, dans lequel lesdits isocyanates sont choisis parmi le diisocyanate de toluène (« TDI »), le diisocyanate de diphénylméthane (« MDI ») ou le diisocyanate de méthylène.

11. Procédé selon la revendication 9, dans lequel lesdits diols sont des polyéthers ou polyesters diols.

12. Procédé selon la revendication 9, dans lequel les esters phosphates chlorés utilisés dans la présente invention contiennent dans la plage de 5 à 15% en poids de phosphore organique, en se basant sur le poids total de l'ester phosphate.

13. Procédé selon la revendication 9, dans lequel les ignifugeants contenant du brome contiennent dans la plage de 10 à 70% en poids de brome, en se basant sur le poids total de l'ignifugeant bromé.

14. Procédé selon la revendication 9, dans lequel les ignifugeants dépourvus d'halogène à base de phosphore contiennent dans la plage de 5 à 40% en poids de phosphore en se basant sur le poids total de l'ignifugeant dépourvu d'halogène à base de phosphore.

15. Procédé selon la revendication 9, dans lequel l'ignifugeant est un ignifugeant contenant du brome.

16. Procédé selon la revendication 9, dans lequel l'ignifugeant est un ignifugeant contenant du brome choisi parmi un diester/éther diol de l'anhydride tétrabromophtalique contenant du brome réactif.

17. Formulation de mousse de polyuréthane viscoélastique flexible selon la revendication 1, comprenant :
a) un ou plusieurs ignifugeants bromés ;
b) au moins un diisocyanate ;
c) au moins un polyoxyalkylène diol dans lequel de 50% à 95% des groupes OH terminaux du diol sont des groupes OH primaires ; et, éventuellement,
d) un ou plusieurs i) surfactants, ii) antioxydants, iii) diluants, iv) prolongateurs de chaîne ou agents de réticulation, v) synergistes, de préférence la mélamine ; vi) agents plastifiants, vii) catalyseurs, viii) eau, ix) variantes d'agents de soufflage comme le chlorure de méthylène, x) pigments, xi) agents d'ouverture des cellules.

18. Formulation selon la revendication 17, dans laquelle l'ignifugeant contenant du brome est un diester/éther diol de l'anhydride tétrabromophtalique contenant du brome réactif.
